# EUROPEAN PATENT APPLICATION

(11) **EP 3 372 968 A1**
(43) Date of publication of application: **12.09.2018**
(21) Application number: 18155907.1
(22) Date of filing: 09.02.2018
(51) Int. Cl.: G01K 1/08, B60H 1/00, G01K 1/14, G01K 13/02, F04D 25/06

(54) **TEMPERATURE SENSOR AND A FAN WITH A TEMPERATURE DETECTING FUNCTION**

(30) Priority: 10.03.2017 TW 106108004
(71) Applicant: Sunonwealth Electric Machine Industry Co., Ltd., Kaohsiung City / Taiwan, R.O.C. (TW)
(72) Inventor: HORNG, Alex, Kaohsiung City, Taiwan, R.O.C. (TW); WEI, Hsiu-Ju, Kaohsiung City, Taiwan, R.O.C. (TW); LIN, Jen-Chieh, Kaohsiung City, Taiwan, R.O.C. (TW)
(74) Representative: Louis Pöhlau Lohrentz

(57) **Abstract**

A temperature sensor includes a sensing portion (1), an electrical transmitting portion (2), and an insulating hardened portion. The electrical transmitting portion (2) is connected to the sensing portion (1). The insulating hardened layer (3) at least envelops the electrical transmitting portion (2). A fan with a temperature detecting function includes the temperature sensor, a fan frame (5), and an impeller (6). The fan frame (5) includes an air inlet (51) and an air outlet (52). The impeller (6) is rotatably mounted between the air inlet (51) and the air outlet (52). The sensing portion (1) of the temperature sensor is securely suspended in one of the air inlet (51) and the air outlet (52) of the fan frame (5) by the insulating hardened layer (3).

## Description

### BACKGROUND OF THE INVENTION

### 1. Field of the Invention

The present invention generally relates to a temperature sensor and a fan and, more particularly, to a temperature sensor mounted in a fan and a fan with a temperature detecting function.

### 2. Description of the Related Art

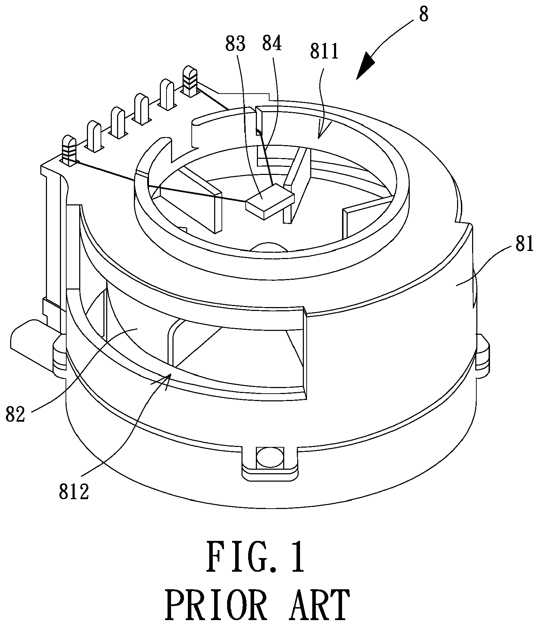

FIG. 1 shows a conventional fan 8 with a temperature detecting function. The fan 8 includes a fan frame 81 having an air inlet 811 and an air outlet 812. An impeller 82 is mounted between the air inlet 811 and the air outlet 812. A temperature sensor 83 is mounted at the air inlet 811 of the fan frame 81. The temperature sensor 83 is securely suspended at the air inlet 811 by lead wires 84. The fan 8 with the temperature function can be used in an air-conditioning system of a vehicle. The temperature sensor 83 detects the temperature in the vehicle and transmits the detected temperature to a computer of the vehicle, and the computer of the vehicle controls operation of the air-conditioning system according to the detected temperature, thereby effectively regulating the temperature in the vehicle.

However, the temperature sensor 83 is merely supported in the air inlet 811 of the fan 8 by the lead wires 84 and is, thus, difficult to be securely positioned at the air inlet 811. Thus, vibrations generated during movement of the vehicle usually cause dislocation of the temperature sensor 83. When the dislocated temperature sensor 83 is too close to the impeller 82, the temperature sensor 83 is apt to collide with the impeller 82 and is, thus, damaged, adversely affecting the temperature detecting function of the temperature sensor 83 and normal operation of the fan 8.

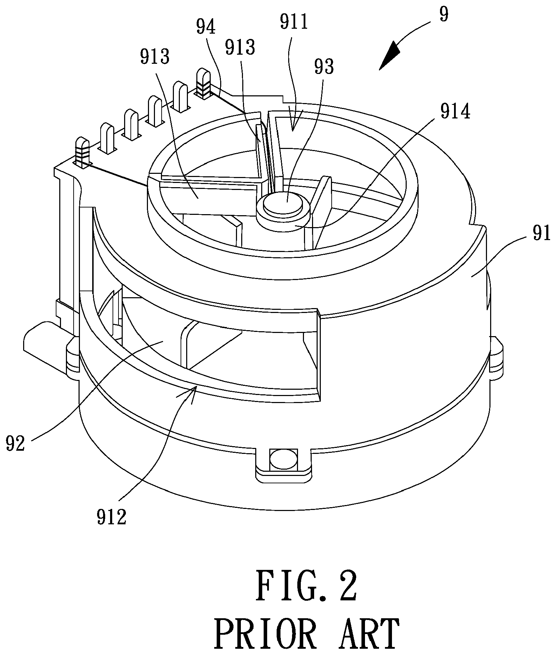

FIG. 2 shows another conventional fan 9 with a temperature detecting function. The fan 9 includes a fan frame 91 having an air inlet 911 and an air outlet 912. An impeller 92 is mounted in the fan frame 91. A temperature sensor 93 is mounted at the air inlet 911 of the fan frame 91. A lead wire supporting portion includes two lead wire supporting sub-portions 913 connected to an inner periphery of the fan frame 91 at the air inlet 911. An element supporting portion 914 is connected to distal ends of the lead wire supporting sub-portions 913. The temperature sensor 93 is supported by the element supporting portion 914. Lead wires 94 electrically connected to the temperature sensor 93 are supported by the lead wire supporting sub-portions 913, avoiding dislocation of the temperature sensor 93 resulting from vibrations generated during movement of the vehicle.

The element supporting portion 914 abuts and excessively shields a side of the temperature sensor 93 of the fan 9, adversely affecting the sensitivity and accuracy of the temperature sensor 93. Furthermore, the lead wire supporting sub-portions 913 and the element supporting portion 914 at the air inlet 911 also adversely affects the air inlet amount and form turbulences. Furthermore, the lead wires 94 directly contact the lead wire supporting sub-portions 913 of the fan frame 91, such that a change in the temperature of the lead wire supporting sub-portions 913 also adversely affects the transmission speed and the reacting speed of the lead wires 94. Improvement is, thus, desired.

Examples of the above conventional fans 8 and 9 are disclosed in U.S. Patent No. 8,251,655 B2 (Taiwan Patent No. 1413492).

### SUMMARY OF THE INVENTION

To solve the above problems, the present invention provides a temperature sensor and a fan with a temperature detecting function to enhance the structural strength of the temperature sensor, such that the fan frame of the fan can support the temperature sensor without any additional supporting structure. This avoids the temperature sensor from colliding with the impeller and avoids reduction in the sensitivity and accuracy resulting from shielding by the supporting structure. Furthermore, adverse influence on the smoothness of flow of the air currents flowing in and out of the fan is reduced.

In an aspect of the present invention, a temperature sensor includes a sensing portion, an electrical transmitting portion, and an insulating hardened portion. The electrical transmitting portion is connected to the sensing portion. The insulating hardened layer at least envelops the electrical transmitting portion.

In another aspect of the present invention, a fan with a temperature detecting function includes the above temperature sensor, a fan frame, and an impeller. The fan frame includes an air inlet and an air outlet. The impeller is rotatably mounted between the air inlet and the air outlet. The sensing portion of the temperature sensor is securely suspended in one of the air inlet and the air outlet of the fan frame by the insulating hardened layer.

Thus, in the temperature sensor and the fan with the temperature detecting function according to the present invention, the structural strength of the temperature sensor is enhanced, such that the fan frame of the fan can support the temperature sensor without any additional supporting structure. This avoids the temperature sensor from colliding with the impeller and avoids reduction in the sensitivity and accuracy resulting from shielding by the supporting structure. Furthermore, the structure of the fan frame is simplified to increase the convenience in the manufacture and assembly of the fan and to increase the smoothness of flow of the air currents flowing in and out of the fan.

In an example, the electrical transmitting portion includes a free end exposed and not enveloped by the insulating hardened layer for electrical connection with a circuit board.

In an example, the temperature sensor further includes a glass protective layer disposed on an outer surface of the sensing portion to protect a temperature sensing section of the sensing portion.

In another example, the sensing portion is not enveloped by the insulating hardened layer. This structure maintains excellent sensitivity and accuracy of the sensing portion.

In a further example, the temperature sensor further includes a sheath enveloping the insulating hardened layer. The sheath provides a protecting effect to avoid damage to the insulating hardened layer resulting from collision or rubbing during use of the temperature sensor. Thus, the temperature is more durable.

In still another example, the insulating hardened layer envelopes the sensing portion and the electrical transmitting portion. This structure increases the structural strengths of both the sensing portion and the electrical transmitting portion.

In yet another example, the insulating hardened layer envelopes an entirety of the sensing portion. This structure increases the protection effect for the sensing portion.

In an example, a portion of the insulating hardened layer enveloping the sensing portion has a thickness smaller than a thickness of another portion of the insulating hardened layer enveloping the electrical transmitting portion. This structure enhances the structural strength of the portion of the temperature sensor at the electrical transmitting portion while avoiding adverse influence on the sensitivity and accuracy of the sensing portion from an excessively thick insulating hardened layer.

In another example, the temperature sensor further includes a glass protective layer disposed on an outer surface of the sensing portion, and the insulating hardened layer envelops the glass protective layer. This structure avoids damage to the temperature sensing section of the sensing portion during formation of the insulating hardened layer.

The insulating hardened layer can be made of a polymer or a thermosetting plastic material, such as an epoxy resin. In an alternative example, the insulating hardened layer is formed by applying varnish to at least an outer surface of the electrical transmitting portion and then drying the varnish. In another alternative example, the insulating hardened layer is formed by dipping. The manufacturing cost is reduced, and the manufacturing convenience is increased.

In an example, the fan frame includes a stopper portion at the one of the air inlet and the air outlet in which the temperature sensor is mounted. The stopper portion is located between the temperature sensor and the impeller. The temperature sensor does not contact the stopper portion. Thus, when the fan is subject to larger vibrations, the temperature sensor will not collide with the impeller, further reducing the risk of damage of the temperature sensor.

The present invention will become clearer in light of the following detailed description of illustrative embodiments of this invention described in connection with the drawings.

### BRIEF DESCRIPTION OF THE DRAWINGS

FIG. 1 is a diagrammatic perspective view of a conventional fan with a temperature detecting function.
FIG. 2 is a diagrammatic perspective view of another conventional fan with a temperature detecting function.
FIG. 3 is a diagrammatic perspective view of a temperature sensor of an embodiment according to the present invention.
FIG. 4 is a cross sectional view of a temperature sensor of an embodiment according to the present invention, with the temperature sensor including an insulating hardened layer enveloping an electrical transmitting portion and a sensing portion.
FIG. 5 is a cross sectional view of a temperature sensor of another embodiment according to the present invention, with the sensing portion not enveloped by the insulating hardened layer.
FIG. 6 is a cross sectional view of a temperature sensor of a further embodiment according to the present invention, with the temperature sensor enveloped by a sheath.
FIG. 7 is a diagrammatic perspective view of a fan with a temperature detecting function of an embodiment according to the present invention.
FIG. 8 is a diagrammatic perspective view of a fan with a temperature detecting function of another embodiment according to the present invention.

### DETAILED DESCRIPTION OF THE INVENTION

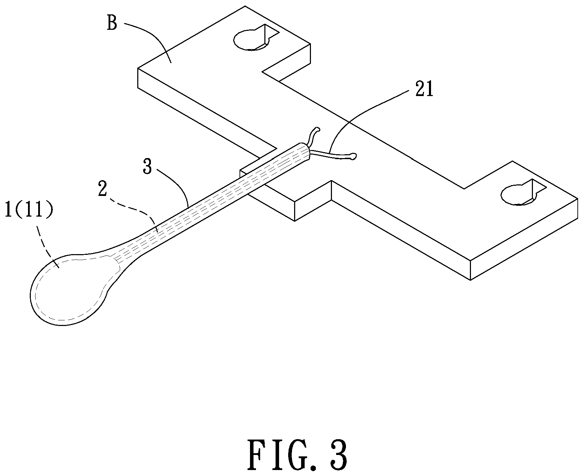

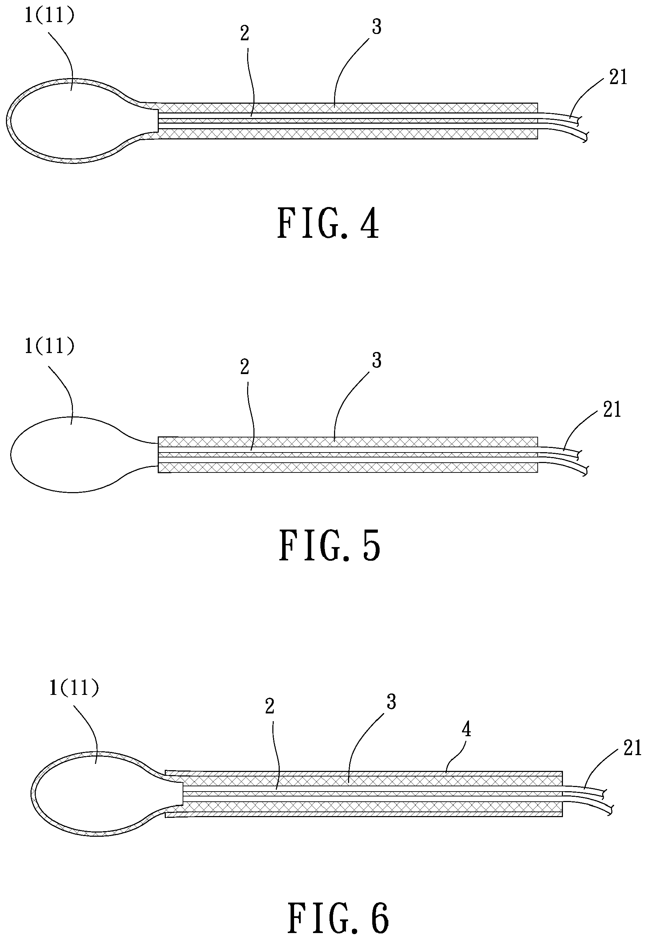

FIGS. 3 and 4 show a temperature sensor of an embodiment according to the present invention. The temperature can be, but not limited to, a thermistor. The temperature sensor includes a sensing portion 1, an electrical transmitting portion 2, and an insulating hardened layer 3. The electrical transmitting portion 2 is connected to the sensing portion 1. The insulating hardened layer 3 at least envelops the electrical transmitting portion 2.

The sensing portion 1 is a portion of the temperature sensor for detecting the ambient temperature. The electrical transmitting portion 2 can be, but not limited to, lead wires or pins. The electrical transmitting portion 2 is connected to the sensing portion 1. The electrical transmitting portion 2 can be electrically connected to a circuit board **B.**

The insulating hardened layer 3 enhances the structural strength of the portion enveloped by it and provides an insulating effect. The insulating hardened layer 3 at least envelops the electrical transmitting portion 2. In an example shown in FIG. 4, the insulating hardened layer 3 envelopes the sensing portion 1 and the electrical transmitting portion 2 to enhance the structural strengths of both the sensing portion 1 and the electrical transmitting portion 2. Particularly, the protection effect of the sensing portion 1 is increased when the insulating hardened layer 3 envelopes the entirety of the sensing portion 1. In an alternative example, the insulating hardened layer 3 envelops the electrical transmitting portion 2 and a section of the sensing portion 1 to expose another section of the sensing portion 1 adjacent to a free end thereof. In another example shown in FIG. 5, the insulating hardened layer 3 only envelops the electrical transmitting portion 2 but does not envelop the sensing portion 1. The sensitivity and the accuracy of the sensing portion 1 can be maintained in the above examples.

Referring to FIGS. 3 and 4 again, the insulating hardened layer 3 can be, but not limited to, made of a polymer or a thermosetting plastic material, such as epoxy resin. In an alternative example, the insulating hardened layer 3 can be formed by applying varnish to at least an outer surface of the electrical transmitting portion 2 and then drying the varnish. In another alternative example, the insulating hardened layer 3 is formed by dipping.

The electrical transmitting portion 2 can include a free end 21 exposed and not enveloped by the insulating hardened layer 3 for electrical connection with the circuit board **B.** Preferably, a portion of the insulating hardened layer 3 enveloping the sensing portion 1 has a thickness smaller than a thickness of another portion of the insulating hardened layer 3 enveloping the electrical transmitting portion 2. This enhances the structural strength of the portion of the temperature sensor at the electrical transmitting portion 2 while avoiding adverse influence on the sensitivity and accuracy of the sensing portion 1 from an excessively thick insulating hardened layer 3.

A glass protective layer 11 can be disposed on an outer surface of the sensing portion 1. In a case that the sensing portion 1 is also enveloped by the insulating hardened layer 3, the insulating hardened layer 3 envelops the glass protective layer 11 to avoid damage to a temperature sensing section of the sensing portion 1 during formation of the insulating hardened layer 3.

With reference to FIG. 6, the temperature sensor can further include a sheath 4 enveloping the insulating hardened layer 3. The sheath 4 can be a heat-shrink tube. Preferably, the sheath 4 does not envelop a portion of the insulating hardened layer 3 aligned with the temperature sensing section of the sensing portion 1, avoiding adverse influence on the sensitivity of the temperature sensor. Furthermore, the sheath 4 provides a protecting effect to avoid damage to the insulating hardened layer 3 resulting from collision or rubbing during use of the temperature sensor. Thus, the temperature is more durable.

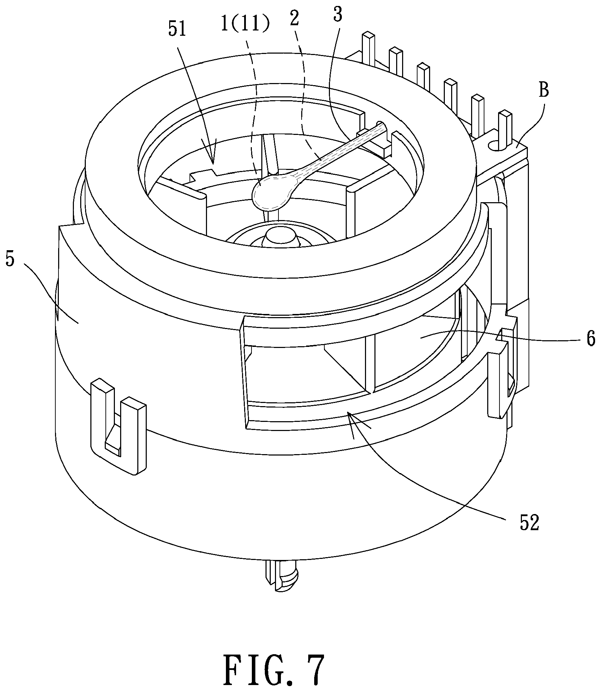

With reference to FIG. 7, the temperature sensor according to the present invention having the above structure can be mounted in a fan to provide the fan with a temperature detecting function. Specifically, the fan includes a fan frame 5 and an impeller 6. The fan frame 5 includes an air inlet 51 and an air outlet 52. The impeller 6 is rotatably mounted between the air inlet 51 and the air outlet 52.

With reference to FIGS. 3 and 7, the sensing portion 1 of the temperature sensor is securely suspended in one of the air inlet 51 and the air outlet 52 of the fan frame 5 by the insulating hardened layer 3. In this non-restrictive example, the electrical transmitting portion 2 is electrically connected to the circuit board **B**, and the circuit board **B** is mounted on the fan frame 5. Furthermore, the shape of the electrical transmitting portion 2 is maintained by the insulating hardened layer 3. Thus, even if the fan frame 5 does not include any supporting structure below the electrical transmitting portion 2 and the sensing portion 1 of the temperature sensor, the temperature sensor can be securely suspended in the air inlet 51 or the air outlet 52. As a result, the structure of the fan frame 5 of the fan can be simplified to increase the convenience in manufacture and assembly of the fan while avoiding the sensing portion 1 of the temperature sensor from being shielded by the fan frame 5 and thereby avoiding reduction in the sensitivity and accuracy of the sensing portion 1. Furthermore, the electrical transmitting portion 2 is avoid from contacting the fan frame 5, such that the transmission speed and the reacting speed of the electrical transmitting portion 2 of the temperature sensor are not adversely affected by the temperature of the fan frame 5. Furthermore, the sensing portion 1 of the temperature sensor is less likely to collide with the impeller 6 under vibrations, avoiding damage to the sensing portion 1. Furthermore, the structure at the air inlet 51 or the air outlet 52 of the fan frame 5 is less shielded to increase the smoothness of flow of the air currents flowing in and out of the fan, avoiding generation of turbulences or wind noise.

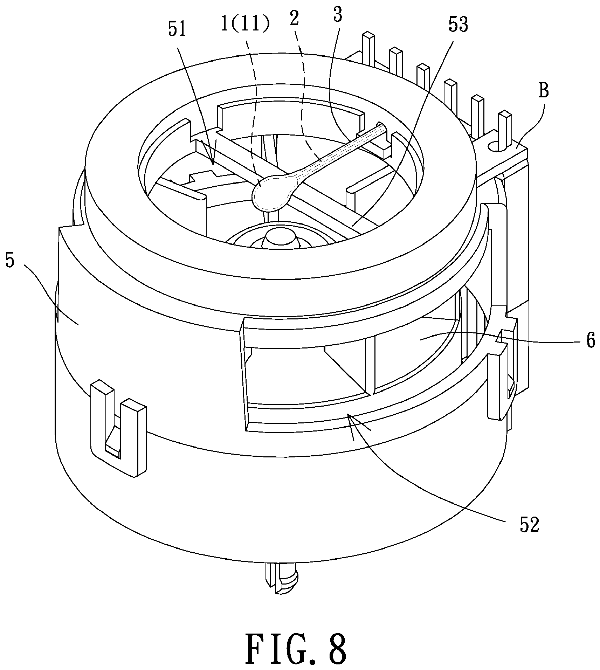

In another embodiment shown in FIG. 8, the fam frame 5 includes a stopper portion 53 at the one of the air inlet 51 and the air outlet 52 in which the temperature of sensor is mounted. The stopper portion 53 is located between the temperature sensor and the impeller 6. Generally, the temperature sensor does not contact the stopper portion 53. Thus, even if the fan is subject to larger vibrations, the temperature sensor will at most collide with the stopper portion 53 of the fan frame 5 rather than the impeller 6, further reducing the risk of damage of the temperature sensor.

In view of the foregoing, in the temperature sensor and the fan with the temperature detecting function according to the present invention, the structural strength of the temperature sensor is enhanced, such that the fan frame 5 of the fan can support the temperature sensor without any additional supporting structure. This avoids the temperature sensor from colliding with the impeller 6 and avoids reduction in the sensitivity and accuracy resulting from shielding by the supporting structure. Furthermore, the structure of the fan frame 5 is simplified to increase the convenience in the manufacture and assembly of the fan and to increase the smoothness of flow of the air currents flowing in and out of the fan.

## Claims

1. A temperature sensor comprising:
a sensing portion (1);
an electrical transmitting portion (2) connected to the sensing portion (1);
wherein the temperature sensor is **characterized in** further comprising an insulating hardened layer (3) at least enveloping the electrical transmitting portion (2).

2. The temperature sensor as claimed in claim 1, **characterized in that** the electrical transmitting portion (2) includes a free end (21) exposed and not enveloped by the insulating hardened layer (3).

3. The temperature sensor as claimed in claim 1 or 2, **characterized in** further comprising a glass protective layer (11) disposed on an outer surface of the sensing portion (1).

4. The temperature sensor as claimed in one of claims 1 to 3, **characterized in that** the sensing portion (1) is not enveloped by the insulating hardened layer (3).

5. The temperature sensor as claimed in claim 4, **characterized in** further comprising a sheath (4) enveloping the insulating hardened layer (3).

6. The temperature sensor as claimed in one of claims 1 to 3, **characterized in that** the insulating hardened layer (3) envelopes the sensing portion (1) and the electrical transmitting portion (2).

7. The temperature sensor as claimed in claim 6, **characterized in that** the insulating hardened layer (3) envelopes an entirety of the sensing portion (1).

8. The temperature sensor as claimed in claim 6 or 7, **characterized in that** a portion of the insulating hardened layer (3) enveloping the sensing portion (1) has a thickness smaller than a thickness of another portion of the insulating hardened layer (3) enveloping the electrical transmitting portion (2).

9. The temperature sensor as claimed in one of claims 6 to 8, **characterized in** further comprising a glass protective layer (11) disposed on an outer surface of the sensing portion (1), and wherein the insulating hardened layer (3) envelops the glass protective layer (11).

10. The temperature sensor as claimed in one of claims 1 to 9, **characterized in that** the insulating hardened layer (3) is made of a polymer.

11. The temperature sensor as claimed in one of claims 1 to 9, **characterized in that** the insulating hardened layer (3) is made of a thermosetting plastic material.

12. The temperature sensor as claimed in claim 11, **characterized in that** the thermosetting plastic material is an epoxy resin.

13. The temperature sensor as claimed in one of claims 1 to 9, **characterized in that** the insulating hardened layer (3) is formed by applying varnish to at least an outer surface of the electrical transmitting portion (2) and then drying the varnish.

14. The temperature sensor as claimed in one of claims 1 to 9, **characterized in that** the insulating hardened layer (3) is formed by dipping.

15. A fan with a temperature detecting function, comprising:
a temperature sensor as claimed in one of claims 1 to 14;
a fan frame (5) including an air inlet (51) and an air outlet (52); and
an impeller (6) rotatably mounted between the air inlet (51) and the air outlet (52),
wherein the fan with the temperature detecting function is **characterized in that** the sensing portion (1) of the temperature sensor is securely suspended in one of the air inlet (51) and the air outlet (52) of the fan frame (5) by the insulating hardened layer (3).
